# EUROPÄISCHE PATENTANMELDUNG

(11) **EP 2 218 338 A1**
(43) Veröffentlichungstag der Anmeldung: **18.08.2010**
(21) Anmeldenummer: 10000866.3
(22) Anmeldetag: 28.01.2010
(51) Int. Cl.: A23L 1/18

(54) **Brausepuffreis**

(30) Priorität: 29.01.2009 DE 102009006653
(71) Anmelder: Katjes Fassin GmbH + co. Kommanditgesellschaft, 42446 Emmerich (DE)
(72) Erfinder: Bekers, Marion, 70736 Fellbach (DE); Hinderschied, Stefan, 46446 Emmerich (DE)
(74) Vertreter: Herzog, Martin

(57) **Zusammenfassung**

Gegenstand der Erfindung ist ein teilchenförmiges Getreideprodukt beinhaltend expandierten Getreidegriess, wobei auf dem Getreidegriess teilchenförmiges Alkalicarbonat mobilisiert ist sowie ein Verfahren zur Herstellung eines solchen teilchenförmigen Getreideproduktes, ein Verfahren zur Herstellung einer Nahrungsmittelmischung und die Verwendung des teilchenförmigen Getreideproduktes als Lebensmittel.

## Beschreibung

Die Erfindung betrifft ein teilchenförmiges Getreideprodukt beinhaltend expandierten Getreidegriess, wobei auf dem Getreidegriess teilchenförmiges Alkalicarbonat immobilisiert ist; ein Verfahren zur Herstellung eines teilchenförmigen Getreideproduktes, ein Verfahren zur Herstellung einer Nahrungsmittelmischung, sowie die Verwendung des teilchenförmigen Getreideproduktes als Lebensmittel.

Gepuffte Getreideprodukte sind regelmäßig Bestandteil von Lebensmitteln, insbesondere der Genussmittel und Snacks produzierenden Industrie. Üblicherweise werden diese gepufften Getreideprodukte dort in gesalzter und/oder gesüßter, und/oder auch in mit Aromastoffen versehener Form eingesetzt. Nicht bekannt sind gepuffte Getreideprodukte, die beim Verzehr einen besonderen sensorischen Eindruck beim Konsumenten hervorrufen oder unterstützen.

Aufgabe ist das Bereitstellen eines gepufften Getreideprodukts, das beim Verzehr neben einem angenehmen Geschmack einen besonderen sensorischen Eindruck beim Konsumenten erzeugt.

Zudem liegt eine erfindungsgemäße Aufgabe auch darin, ein Getreideprodukt bereitzustellen, dass eine gute Lagerstabilität aufweist und insbesondere seine geschmacklichen sowie sensorischen Ursprungseigenschaften auch bei höheren Temperaturen beibehält und dabei keinen fettigen Eindruck, insbesondere in der Hand des Konsumenten, verursacht.

Einen Beitrag zur Lösung der vorstehend skizzierten Fragestellung leisten die Gegenstände der kategoriebildenden Ansprüche, wobei die davon abhängigen Unteransprüche weitere erfindungsgemäße Ausführungsformen darstellen.

Ein Gegenstand der vorliegenden Erfindung ist ein teilchenförmiges Getreideprodukt, beinhaltend expandierten Getreidegriess, wobei auf dem Getreidegriess teilchenförmiges Alkalicarbonat immobilisiert ist.

Unter einem Griess werden, wie in der Müllerei üblich, von den Schalen befreite Getreideteilchen mit einem Durchmesser von 0,1 bis 3 mm, bevorzugt 0,2 bis 1,5 mm, besonders bevorzugt von 0,3 bis 0,6 mm verstanden, die beispielsweise durch Mahlen von Getreide in einer Mühle erhältlich sind. Der Getreidegriess kann auf prinzipiell jeder dem Fachmann bekannten und geeignet erscheinenden Getreidesorte basieren. Gemäß einer besonders bevorzugten Ausführungsform basiert der Getreidegriess auf mindestens einem Getreide ausgewählt aus der Gruppe bestehend aus: Weizen, Reis, Mais, Hafer, Dinkel, Gerste oder Roggen oder einer Mischung von zwei oder mehr davon, oftmals jeweils als Mehl, Schrot oder Vollkorn. Bei Schrot- oder Vollkorneinsatz beträgt der Schrot- bzw. Vollkornanteil an dem Getreide mindestens 70 Gew.-%, bezogen auf das Gesamtgewicht des Getreideprodukts. Ganz besonders bevorzugt beinhaltet der Getreidegriess Reis, oder Mais, oder einer Mischung aus Reis und Mais, vorzugsweise mit einem Überschuss an Reis, der bevorzugt mindestens 10 Gew.-%, besonders bevorzugt mindestens 20 Gew.-%, jeweils auf die Maismenge bezogen, beträgt.

Gemäß einer weiteren bevorzugten Ausführungsform beinhaltet der Getreidegriess:
- mindestens 30 Gew.-%, oder mindestens 40 Gew.-% bis 80 Gew.-% Reisgriess,
- mindestens 20 Gew.-%, oder mindestens 30 Gew.-% bis 80 Gew.-% Maisgriess,
- sowie gegebenenfalls weitere Getreidebestandteile,
wobei die Summe aller Bestandteile des Getreidegriess 100 Gew.-% ergibt.

Insbesondere bevorzugt ist eine Mischung aus Reisgriess und Maisgriess im Verhältnis von 1,2 : 1 bis 1 : 1,2.

Unter Alkalicarbonaten werden Carbonate und Hydrogencarbonate der Alkalimetalle, Kalium, Natrium, sowie Ammoniumcarbonat und Ammoniumhydrogencarbonat, oder eine Mischung aus zwei oder mehr davon, verstanden. Gemäß einer besonders bevorzugten Ausführungsform eignen sich Kaliumhydrogencarbonat, Natriumhydrogencarbonat sowie Ammoniumcarbonat, wobei Natriumhydrogencarbonat ganz besonders bevorzugt ist. In einer weiteren Ausgestaltung können diese Carbonate mit einer nachstehend näher beschriebenen organischen Säure vorliegen. In einer anderen Ausgestaltung der vorliegenden Erfindung liegen die Carbonate, ggf. neben der organischen Säure, noch mit einem nachfolgend näher beschriebenen Fett vor, wobei es bevorzugt ist, dass dieses Fett als Coating die Carbonate ggf. mit der organischen Säure mindestens teilweise mit einem Film umschließt. Unter einem Coating werden Beschichtungen oder Überzüge verstanden, die einen Gegenstand zumindest teilweise bedecken oder abdecken. Bezüglich des bevorzugt einzusetzenden Fetts und Säure wird auf die nachstehenden Ausführungen verwiesen.

Als Partikelgrößen des teilchenförmig vorliegenden Alkalicarbonats kommen grundsätzlich alle dem Fachmann bekannten und für den Zweck der vorliegenden Erfindung geeignet erscheinenden Partikelgrößen in Betracht. Als teilchenförmig wird das Alkalicarbonat insbesondere dann bezeichnet, wenn mindestens ein Teil seiner Partikel eine Partikelgröße von 50 µm bis 500 µm aufweist.

Entsprechend dem zuvor Gesagten weisen vorzugsweise mindestens 50 Gew.-%, insbesondere mindestens 70 Gew.-%, besonders bevorzugt mindestens 80 Gew.-%, und am meisten bevorzugt in einem Bereich von mindestens 90 Gew.-% bis 99,5 Gew.-% der Partikel, jeweils bezogen auf das Gesamtgewicht des Alkalicarbonats, eine Partikelgröße in einem Bereich von 50µm bis 500 µm, auf. Gleichfalls gelten die im vorstehenden Satz bezeichneten Gewichtsprozentangaben jeweils für die nachfolgenden Partikelgrößenbereiche: von 70 µm bis 400 µm, oder bevorzugt von 100 bis 360 µm, oder von 130 µm bis 300 µm, oder 170 µm bis 250 µm, jeweils bezogen auf das Gesamtgewicht des Alkalicarbonats.

Das teilchenförmig vorliegende Alkalicarbonat kann Partikel einer einzigen Partikelgröße aufweisen, oder Partikel mehrerer Partikelgrößen, die eine Partikelgrößenverteilung bilden. Liegt eine Partikelgrößenverteilung vor, ist eine einer Glockenkurve nahekommende oder dieser entsprechende Verteilung bevorzugt.

Weiterhin ist es auch möglich, dass Agglomerate von Partikel auftreten, wenn zwei oder mehrere Partikel aneinander haften. Auch solche Agglomerate werden durch den erfindungsgemäßen Partikelbegriff unabhängig von deren Zusammensetzung und Entstehen umfasst.

Ferner entspricht es einer Ausgestaltung der vorliegenden Erfindung, das teilchenförmige Alkalicarbonat so auszuwählen, dass sein Feinstaubanteil möglichst gering ist. Unter dem Feinstaubanteil wird derjenige Gewichtsanteil an Partikeln verstanden, der eine Partikelgröße von weniger als 8 µm aufweist. Bevorzugt beträgt der Feinstaubanteil weniger als 30 Gew.-%, weniger als 20 Gew.-%, weniger als 10 Gew.-%, bevorzugt weniger als 5 Gew.-%, oder weniger als 0,5 Gew.-%, jeweils bezogen auf das Gesamtgewicht des Alkalicarbonats. Oftmals liegt der Feinstaubanteil in einem Bereich von 1 bis 10 Gew.-%, bezogen auf das Gesamtgewicht des Alkalicarbonats.

Unter einem expandierten Getreidegriess wird ein Getreidegriess verstanden, dessen Dichte gegenüber unbehandeltem, aus der Granulierung stammenden Getreidegriess herabgesetzt ist, wobei dessen im Raum beanspruchtes Volumen gegenüber den unbehandelten Getreidegriessteilchen erheblich vergrößert ist. Bei Betrachtung des arithmetischen Mittels des Längendurchmessers, ist der Durchmesser der expandierten Getreidegriessteilchen um das 3-fache bis 20-fache, bevorzugt um das 3-fache bis 12-fache, gegenüber dem nicht expandierten Getreidegriessteilchen vergrößert.

Gemäß einer besonders bevorzugten Ausführungsform weisen mindestens 50 Gew.-% des expandierten Getreidegriess Teilchen mit einer Teilchengröße in einem Bereich von 2 bis 30 mm, bevorzugt 3 bis 20 mm, und insbesondere bevorzugt von 5 bis 15 mm auf. Gleichfalls gelten die im vorstehenden Satz bezeichneten Teilchengrößenbereiche jeweils die nachfolgenden Gewichtsanteile: mindestens 60 Gew.-% bis 99,9 Gew.-%, oder mindestens 70 Gew.-% bis 98 Gew.-%, jeweils in Bezug auf den gesamten expandierten Getreidegriess.

Erfindungsgemäß ist das teilchenförmige Alkalicarbonat auf dem Getreidegriess, besonders bevorzugt auf der Oberfläche, immobilisiert. Immobilisiert bedeutet, dass ein Gegenstand auf einem weiteren Gegenstand räumlich fixiert ist. Diese Fixierung kann so fest sein, dass sie nicht wieder gelöst werden kann, ohne einen der beiden Gegenstände, oder gar beide, zu beschädigen. Ebenso kann eine Fixierung bei den vorgesehenen Einsatzbedingungen des immobilisierten Gegenstands fest sein, aber z. B. durch Erwärmen oder Befeuchten ohne Beschädigen der beteiligten Gegenstände wieder gelöst werden. Weiter bevorzugt ist das Alkalicarbonat zumindest teilweise auf der Oberfläche des Getreidegriess immobilisiert.

Gemäß einer weiteren bevorzugten Ausführungsform ist das Alkalicarbonat auf der Oberfläche des Getreidegriess mit einem Bindemittel immobilisiert. Als Bindemittel kommen alle dem Fachmann bekannten und geeignet erscheinenden Stoffe in Betracht. Besonders bevorzugt sind als Bindemittel Fett, Zuckerlösung, Wachse oder Klebstoff, wie Gummi Arabicum, wobei in einer Ausgestaltung Fett und in einer anderen Ausgestaltung der vorliegenden Erfindung Zucker bzw. Zuckerlösungen besonders bevorzugt sind.

Als Fett oder Fette eignet sich sämtliche dem Fachmann für Lebensmittelzwecke geeignet erscheinende Fette und Öle pflanzlicher und tierischer Herkunft, wobei pflanzliche Fette bevorzugt sind. Der Schmelzpunkt des Fetts oder der Fette sollte so gewählt sein, dass eine gute Immobilisierung und ein möglichst geringes Rückfetten bei der Berührung des Getreideprodukts sich ergeben. Daher sind erfindungsgemäß Fette mit einer Schmelztemperatur von über 40°C, vorzugsweise über 50°C und besonders bevorzugt über 55°C bevorzugt. Oftmals liegt die Schmelztemperatur der Fette unter 200°C. Als tierische Fette kommen Talk, Schmalz und Butter oder eine Kombination aus mindestens zwei davon in Betracht. Als pflanzliche Fette kommen gehärtete oder ungehärtete oder eine Kombination daraus in Betracht, wobei gehärtete Fette bevorzugt sind. Quellen pflanzlicher Fette sind Palmsaaten, Olivensaaten, Sonnenblumensaaten, Rapssaaten oder andere Ölsaaten oder eine Mischung aus mindestens zwei davon, wobei Palmöl und insbesondere gehärtetes Palmöl besonders bevorzugt ist.

Als Zuckerlösung eignet sich beispielsweise eine wässrige Lösung mit einem Gewichtsanteil von 70 bis 80 % eines oder mehrerer Zucker. Als Zucker eignet sich ein Stoff ausgewählt aus Glukose, Saccharose, Fructose, Maltose oder Galactose oder eine Kombination von zwei oder mehr davon, wobei Glukose, Saccharose, Fructose bevorzugt und Glukose besonders bevorzugt sind. Es können jedoch auch zuckerreduzierte Bindemittel auf Sorbit-, Xylit- oder Isomalt^{®}-Basis eingesetzt werden. Auch Süßstoffe wie Acesulfam, Aspartam und Saccharin oder Sucralose oder eine Kombination aus mindestens zwei davon eigenen sich als Bindemittel.

Gemäß einer weiteren bevorzugten Ausführungsform liegt der Wassergehalt des Getreideproduktes, bezogen auf das gesamte Getreideprodukt, in einem Bereich von 0 bis 15 Gew.-%, weiter bevorzugt von 0,1 bis 10 Gew.-% oder von 2 bis 10 Gew.-%. Unter dem in Bezug genommenen gesamten teilchenförmigen Getreideprodukt wird das Getreideprodukt inklusive aller Zusätze und Beschichtungen verstanden.

Gemäß einer weiteren bevorzugten Ausführungsform liegt der Anteil an Fett, bezogen auf das gesamte Getreideprodukt, in einem Bereich von 0,1 bis 20 Gew.-%, bevorzugt von 5 bis 15 Gew.-%.

Gemäß einer weiteren bevorzugten Ausführungsform weist das Getreideprodukt
aa) mindestens 30 Gew.-%, vorzugsweise mindestens 40 Gew.-% und besonders bevorzugt mindestens 45 Gew.-% expandierten Getreidegriess,
bb) 1 bis 20 Gew.-%, bevorzugt 3 bis 15 Gew.-% oder von 5 bis 10 Gew.-% Alkalicarbonat und
cc) ggf. weitere Zusatzstoffe auf,
wobei die Summe der Gewichtsprozente 100 Gew.-% ergibt.

Als Zusatzstoffe eignen sich prinzipiell alle dem Fachmann bekannten und für teilchenförmige Getreideprodukte geeignet erscheinende Zusatzstoffe. Insbesondere eignen sich als Zusatzstoffe Fette, Säuren, Geschmacksverstärker, Farbstoffe, Aromastoffe, Stabilisatoren, Süßstoffe oder Antioxidantien oder eine Kombination von zwei oder mehr davon.

Gemäß einer weiteren bevorzugten Ausführungsform weist das Getreideprodukt einen pH-Wert in einem Bereich von 5 bis 8, vorzugsweise im Bereich von 6 bis 7,5 und besonders bevorzugt im Bereich von 6 bis 7,3 auf. Bei der Einstellung des pH-Werts ist vorteilhafterweise darauf zu achten, dass eine Gasentwicklung nicht schon im verpackten erfindungsgemäßen Getreideprodukt während der Lagerung erfolgt.

Ferner entspricht es einer erfindungsgemäßen Ausgestaltung, dass das Getreideprodukt eine organische Säure beinhaltet. Hierbei ist es bevorzugt, dass diese organische Säure in einer Menge in einem Bereich von 10 bis 90 Gew.-%, vorzugsweise in einem Bereich von 30 bis 85 Gew.-% und besonders bevorzugt in einem Bereich von 60 bis 80 Gew.-%, jeweils bezogen auf das Alkalicarbonat, eingesetzt wird. Als organische Säuren kommen grundsätzlich alle dem Fachmann bekannten und insbesondere für den Einsatz in Lebensmitteln geeigneten in Betracht. Besonders eigenen sich Carbonsäuren, insbesondere mit 2 bis 30 C-Atomen, als organische Säuren. Hierunter sind Fruchtsäuren, insbesondere Äpfelsäure, Zitronensäure, Fumarsäure, Gluconsäure, Glycolsäure, Mandelsäure, Milchsäure, Oxalsäure, Salicylsäure, α-Hydroxycaprylsäure und Weinsäure bevorzugt, wobei Wein- und/oder Zitronensäure besonders bevorzugt und Zitronensäure darüber hinaus bevorzugt ist. Es ist erfindungsgemäß ferner bevorzugt, dass der Gehalt an organischer Säure im teilchenförmigen Alkalicarbonat im Vergleich zu dem expandierten Getreidegriess höher ist. Häufig liegt das daran, dass das Alkalicarbonat mit der organischen Säure als Mischung vorliegt. Folglich liegt das Alkalicarbonat in einer erfindungsgemäßen Ausgestaltung in seiner mindestens teileweise protonierten Form vor.

In einer weiteren erfindungsgemäßen Ausgestaltung des Getreideprodukt enthält dieses ein Fett. Weitere Einzelheiten zu diesem Fett finden sich an anderer Stelle dieses Textes. Bevorzugt liegt der Anteil von Fett oder Fetten an dem Getreideprodukt in einem Bereich von 1 bis 20 Gew.-%, vorzugsweise in einem Bereich von 5 bis 15 Gew.-% und besonders bevorzugt in einem Bereich von 7 bis 12 Gew.-%, jeweils bezogen auf das Getreideprodukt. Weiterhin ist es erfindungsgemäß bevorzugt, dass die Fettkonzentration im Außenbereich und vorzugsweise bei den Carbonatteilchen des Getreideprodukts höher ist, als im durch den expandierten Getreidegreiss gebildeten Innenbereich.

Ein weiterer Gegenstand der vorliegenden Erfindung ist ein Verfahren zur Herstellung eines teilchenförmigen Getreideprodukts beinhaltend die Verfahrensschritte
i. Bereitstellen eines expandierten Getreidegriess,
ii. Kontaktieren eines Alkalicarbonats mit dem expandierten Getreidegriess in Gegenwart eines Bindemittels unter Erhalt eines teilchenförmigen Getreideprodukts mit immobilisiertem Akalimetallcarbonat,
iii. gegebenenfalls Trocknen des teilchenförmigen Getreideprodukts.

Es entspricht einer Ausgestaltung der vorliegenden Erfindung, in der das Bindemittel in Schritt ii, zusammen mit dem Alkalicarbonat zugegeben wird. Entsprechend einer Ausgestaltung, ist das Bindemittel und das Alkalicarbonat vor Verfahrenschritt ii. miteinander in Kontakt gebracht worden, um ein Carbonatgemisch zu erhalten. Dieses erfolgt vorzugsweise durch Mischen des Bindemittels und des Alkalicarbonats, das auch die organischen Säure beinhalten kann. Bei diesem Mischen, das beispielsweise in einer Dragiertrommel erfolgen kann, wird das Alkalicarbonat vorzugsweise mit dem Bindemittel gecoatet. Hierbei, wie bei dem Inkontaktbringen im Allgemeinen, ist es mitunter bevorzugt, dass das Bindemittel flüssig oder zumindest weich und damit verformbar vorliegt. Hierzu kann das Bindemittel, insbesondere bei den Zuckern, in einem Lösemittel, meist Wasser oder ein Alkohol wie Ethanol, aufgenommen oder, wie bei den Fetten bevorzugt, an- oder aufgeschmolzen werden. Das Inkontaktbringen erfolgt bevorzugt in einer rotierenden Trommel wie eine Dragiertrommel.

Gemäß einer weiteren Ausgestaltung der vorliegenden Erfindung ist es bevorzugt, dass das Carbonatgemisch Komponenten beinhaltet:
1c) mindestens 10 Gew.-%, vorzugsweise mindestens 20 Gew.-% und besonders bevorzugt mindestens 30 Gew.-% der organischen Säure;
2c) mindestens 10 Gew.-%, vorzugsweise mindestens 30 Gew.-% und besonders bevorzugt mindestens 50 Gew.-% des Alkalicarbonats;
3c) im Bereich von 1 bis 15 Gew.-%, vorzugsweise im Bereich von 2 bis 10 Gew.-% und besonders bevorzugt im Bereich von 2,5 bis 7 Gew.-% des Fetts; sowie
4c) bis 10 Gew.-%, vorzugsweise bis zu 7 Gew.-% und besonders bevorzugt bis 5 Gew.-% weitere von den vorstehenden Komponenten verschiedene Zusatzstoffe;
wobei die Summer der Gew.-%-Angaben sich jeweils auf 100 Gew.-% addiert und auf die Carbonatmischung bezogen ist.

Das Bereitstellen eines expandierten Getreidegriess gemäß Verfahrensschritt i. kann prinzipiell auf jede dem Fachmann bekannte und geeignet erscheinende Weise erfolgen. Bevorzugt wird hierzu mindestens ein unbehandelter, durch Granulierung von Getreide erhältlicher Getreidegriess bereitgestellt. Dieser Getreidegriess wird mit Wasser kontaktiert und anschließend einer Hitzebehandlung unterzogen. Unter Kontaktieren versteht der Fachmann Mischen, Absorbieren und/oder Aufnehmen von Wasser durch den Griess und/oder das Behandeln des Griess mit Sattdampf.

Unter einer Hitzebehandlung wird das Erwärmen der bereitgestellten Mischung auf eine Temperatur von 90 bis 250 °C, bevorzugt 100 bis 200 °C, weiter bevorzugt 120 bis 170 °C oder ca. 150 °C verstanden. Weiter ist es bevorzugt, die Hitzebehandlung bei einem Druck von 1 bis 20 bar, bevorzugt 2 bis 15 bar, weiter bevorzugt 3 bis 12 bar oder 3 bis 10 bar, durchzuführen. Insbesondere bevorzugt wird die Hitzebehandlung bei einer Temperatur von 100 bis 200 °C und einem Druck von 3 bis 10 bar durchgeführt. Weiterhin wird während der Hitzebehandlung die Mischung bevorzugt gerührt oder auf eine andere Weise weiter vermischt.

Als nächstes wird die heiße und mit Druck beaufschlagte Mischung entspannt, wobei ein expandierter Getreidegriess erhalten wird. Bevorzugt erfolgt dieser Schritt über eine Düse. Hierbei ist jedem Fachmann bekannte und geeignet erscheinende Düse oder eine andere Vorrichtung, die gleich wirkend ist, geeignet.

Gemäß einer weiteren bevorzugten Ausführungsform werden die Schritte Mischen, Erhitzen, mit Druck beaufschlagen und entspannen der Mischung in einem zusammengefassten Schritt, insbesondere als Extrusion, durchgeführt.

Gemäß einer Ausgestaltung des erfindungsgemäßen Verfahrens wird der expandierte Getreidegriess mit einem Bindemittel benetzt. Benetzen bedeutet das Kontaktieren eines Feststoffs mit einer Flüssigkeit. Bevorzugt wird das Benetzen bei erhöhter Temperatur, weiter bevorzugt bei einer Temperatur zwischen 30 und 80 °C, bevorzugt zwischen 35 und 70 °C, weiter bevorzugt zwischen 50 und 65 °C durchgeführt. Es entspricht einer bevorzugten Ausführungsform, den expandierten Getreidegriess zum Benetzen in ein Behältnis, mit oder ohne Rührer, zu überführen und in diesen das Bindemittel zu geben. Besonders geeignet ist als Behälter hierbei eine Dragiertrommel. Als nächstes wird das Alkalicarbonat mit dem mit Bindemittel belegten, expandierten Getreidegriess unter Erhalt eines teilchenförmigen Getreideproduktes mit immobilisierten Alkalimetallcarbonat kontaktiert (Verfahrensschritt ii.). Bevorzugt erfolgt dieser Schritt durch Mischen des Alkalicarbonats mit dem benetzten, expandierten Getreidegriess.

Gemäß Verfahrensschritt iii. wird das teilchenförmige Getreideprodukt anschließend getrocknet. Bevorzugt erfolgt das Trocknen bei 30 bis 45 °C und vermindertem Druck, bspw. bei einem Druck in einem Bereich von 600 bis 1 mbar. Insbesondere für den Fall, dass die Immobilisierung mittels eines Lösemittels erfolgt, indem das Bindemittel aufgenommen ist, ist es vorteilhaft gemäß Verfahrensschritt iii. zu trocknen. Dieses gilt besonders bei dem Einsatz von Zucker als Bindemittel.

Weiterhin ist es bevorzugt, in einem oder mehreren der zuvor beschriebenen Verfahrensschritte weitere Zusatzstoffe dem expandierten Getreidegriess zuzuführen. Als Zusatzstoffe sind hierbei die zuvor ausgeführten Zusatzstoffe, insbesondere bevorzugt Aromastoffe und Farbstoffe geeignet.

Ein weiterer Gegenstand der vorliegenden Erfindung ist ein teilchenförmiges Getreideprodukt erhältlich nach dem zuvor beschriebenen Verfahren, oder einer bevorzugten Ausführungsform des zuvor beschriebenen Verfahrens.

Ein weiterer Gegenstand der vorliegenden Erfindung ist ein Verfahren zur Herstellung einer Nahrungsmittelmischung beinhaltend als Verfahrensschritte:
Ia. Bereitstellen eines teilchenförmigen Getreideproduktes wie zuvor beschrieben oder eines teilchenförmiges Getreideproduktes erhältlich nach einem der zuvor beschriebenen Verfahren,
IIa. In Kontaktbringen des teilchenförmigen Getreideproduktes mit mindestens einer weiteren Nahrungsmittelkomponente.

Prinzipiell kann das in Kontaktbringen gemäß Verfahrensschritt IIa. Nach jeder dem Fachmann bekannten und geeignet erscheinenden Methode durchgeführt werden. Insbesondere bevorzugt ist Mischen, Beschichten oder Einarbeiten, oder eine Kombination von zwei oder mehr davon.

Gemäß einer bevorzugten Ausführungsform kann das teilchenförmige Getreideprodukt mit folgenden Gegenständen gemischt werden: Obst, getrocknetes Obst, Müsli, Haferflocken, Puffreis oder Zerealien oder eine Kombination von zwei oder mehr davon.

Gemäß einer weiteren, bevorzugten Ausführungsform kann das teilchenförmige Getreideprodukt mit folgenden Gegenständen, zumindest teilweise, beschichtet werden: Schokolade, Schokoguss, Zuckerguss, Gelatine oder Knochenleim oder einer Kombination aus mindestens zwei davon.

Bevorzugt kann das teilchenförmige Getreideprodukt durch Bestreichen, Eintauchen, Sprühen oder Begießen beschichtet werden.

Gemäß einer weiteren, bevorzugten Ausführungsform kann das teilchenförmige Getreideprodukt in folgende Stoffe eingearbeitet werden: Mehl, Teig, Backmischungen, Lollies, Süßriegel, Kuchen, Pudding, Gries, Griesbrei, Götterspeise oder Zerealien oder einer Kombination aus zwei oder mehr davon.

Gemäß einer weiteren, bevorzugten Ausführungsform wird das Verfahren zur Herstellung einer Nahrungsmittelmischung eingesetzt, wobei folgende Gegenstände erhältlich sind: Getreide-, Back-, Konditorei- und Konfiserieprodukte aller Art, insbesondere gefüllte oder ungefüllte Süßriegel, gefüllte oder ungefüllte Schokoriegel, gefüllte oder ungefüllte Schokolade, Backmischungen, Kuchen, Fertigkuchen, Frühstückscerealien oder dergleichen. Außerdem fallen Milch- und Sojaprodukte unter die Nahrungsmittelmischungen wie Sahne-, Quark-, Yoghurt-, Kefir-, Ayram- und Pudingprodukte. Zudem kommen als Nahrungsmittelmischungen Brotaufstriche wie Marmeladen, Konfitüren, Schokoladen- oder Erdnusspasten in Betracht.

Es ist vorteilhaft, die zuvor erwähnten Gegenstände, wie auch ggf. die erfindungsgemäße Nahrungsmittelmischung zu verpacken, wobei eine verpackte Mischung oder ein verpackter Gegenstand erhältlich ist. Gemäß einer bevorzugten Ausführungsform werden Einzel-, Doppel-, Dreier- und/oder Vierer-Portionen davon bereitgestellt.

Ein weiterer Gegenstand der vorliegenden Erfindung ist die Verwendung des in dieser Beschreibung beschriebenen teilchenförmigen Getreideproduktes oder eines nach dem hier beschriebenen Verfahren erhältlichen Getreideproduktes als Lebensmittel.

Die Erfindung wird nun anhand nicht limitierender Beispiele näher erläutert.

### Messmethoden

### 1) Bestimmung des Feuchtigkeitsgehalts von Puffreis

In einem Satorius MA 45 Feuchtigkeitsmessgerät der Firma Satorius, Deutschland, werden 3,00 g Produkt eingewogen und der Deckel geschlossen. Die Messung erfolgt durch Programm P2 bei einer Einstellung von 110°C und einer Gewichtskonstanz, erreicht bei ± 1 mg/24sec.

### 2) Bestimmung der Teilchengröße

Die Teilchengröße wird mittels Siebananlyse bestimmt. Hierzu wird ein Gerät der Firma Retsch, Deutschland, Typ AS 200 Control eingesetzt. Ferner werden Siebe mit den Nennweiten 0,5 mm und 0,355 mm bei einer Schwingunshöhe von 1,5 und einer "intervaltime sec" von 10 eingesetzt.

### Beispiele

### Beispiel 1: Herstellen von Puffreis

180 g Reisgriess und 120 g Maisgries (jeweils Lieferant/Hersteller) wurden zu einem Trockengemisch vereint und anschließend mit 23 g Wasser einem Doppelschraubenextruder, Typ DNDG-62/12D Zweiwellenextruder der Firma Bühler, Schweiz, zugeführt. Diese Mischung wurde über 4 Minuten im Extruder auf ca. 160°C erhitzt und über ein Mundstück, an dem an der Mischung ein Druck von 90 bar anlag, unter Erhalt eines geblähten Getreidebreis entspannt. Beim Austritt aus dem Extruder wurde der Getreidebrei mit einem Hochgeschwindigkeitsmesser des Extruders zu einem teilchenförmigen Getreideprodukt geschnitten. Dieses wies, einen Wassergehalt von <7 Gew.-% und einen Fettgehalt von 1 Gew.-%, jeweils bezogen auf das Gesamtgewicht des teilchenförmigen Getreideprodukts, auf.

### Beispiel 2: Herstellen von Brausepuffreis

300 g des in Beispiel 1 erhaltenen Getreideprodukts wurden in eine Dragiertrommel gegeben und mit 30 g Fett ("Warapalm" erhältlich von WALTER RAU Neusser Öl und Fett AG, Neuss) belegt. Dazu wurde die zuvor beschriebene Mischung in der Dragiertrommel unter Erwärmen auf ca. 60 °C während 5 min. gemischt. Anschließend wurde 50 g Carbonatmischung (aus Zitronensäuren, Natriumhydrogencarbonat und gehärteten Palmöl - Gewichtsverhältnis 4:5:1) zugegeben und für 5 bis 10 min. bei 60 °C weiter gerührt. Der so erhältliche Brausepuffreis wies 50 Gew.-% expandiertes Getreideprodukt, 30 Gew.-% Zucker, 9 Gew.-% Fett und 8 Gew.-% Natriumhydrogencarbonat auf. 50 Gew.-% aller Teilchen wiesen eine Teilchengröße in einem Bereich von 5 - bis 9 mm auf.

### Beispiel 3: Herstellen eines Süßriegels mit Brausepuffreis

10 g der aus Beispiel 2 erhältlichen Brausepuffreisteilchen wurden mit 10 g Getreideprodukt aus Beispiel 1 vermischt und anschließend in einem Konvektionsbandtrockner (Procter & Schwartz, Philadelphia, USA) für 6 Minuten bei einer Temperatur im Bereich von 100 bis 120 °C getrocknet und geröstet. Der Feuchtigkeitsgehalt betrug nunmehr 3 Gew.-%. Diese wurden mittels wieder angefeuchtet bis auf einen Feuchtigkeitsgehalt von 6 Gew.-%. Der auf diese Weise konditionierte Puffreis wurde in Gießformen von 2x4 cm gegeben und durch Übergießen mit Schokolade umgeben. Nach einem Abkühl- und Ruheschritt wurden Schokoriegel mit Brausepuffreis erhalten.

## Patentansprüche

1. Teilchenförmiges Getreideprodukt beinhaltend expandierten Getreidegriess, wobei auf dem Getreidegriess teilchenförmiges Alkalicarbonat immobilisiert ist.

2. Getreideprodukt nach Anspruch 1, wobei sich das Alkalicarbonat auf der Oberfläche des Getreidegriess befindet.

3. Getreideprodukt nach Anspruch 1 oder 2, wobei das Alkalicarbonat auf der Oberfläche des Getreidegriess mit einem Bindemittel immobilisiert ist.

4. Getreideprodukt nach einem der vorhergehenden Ansprüche, wobei der Wassergehalt, bezogen auf das gesamte, teilchenförmige Getreideprodukt, in einem Bereich von 0 bis 15 Gew.-% liegt.

5. Getreideprodukt nach einem der vorhergehenden Ansprüche, wobei der Fettanteil des gesamten Getreideprodukts in einem Bereich von 0,1 bis 20 Gew.-% beträgt.

6. Getreideprodukt nach einem der vorhergehenden Ansprüche, wobei das Getreideprodukt
aa) mindestens 30 Gew.-% expandierten Getreidegriess,
bb) 1 bis 20 Gew.-% Alkalicarbonat, und
cc) gegebenenfalls weitere Zusatzstoffe
aufweist, wobei die Summe der Gewichtsprozente 100 Gew.-% ergibt.

7. Getreideprodukt nach einem der vorhergehenden Ansprüche, wobei mindestens 50 Gew.-% des expandierten Getreidegriess als Teilchen mit einer Teilchengröße in einem Bereich von 2 bis 30 mm vorliegen.

8. Getreideprodukt nach einem der vorhergehenden Ansprüche, wobei mindestens 50 Gew.-% des Alkalicarbonats als Teilchen mit einer Teilchengröße in einem Bereich von 100 bis 355 µm vorliegen.

9. Getreideprodukt nach einem der vorhergehenden Ansprüche, wobei der expandierte Getreidegriess auf mindestens einem Getreide ausgewählt aus der Gruppe bestehend aus Weizen, Reis oder Mais, oder einer Mischung aus zwei oder mehr davon, basiert.

10. Getreideprodukt nach einem der vorhergehenden Ansprüche, wobei das Alkalicarbonat ein Hydrogencarbonat, insbesondere Natriumhydrogencarbonat, ist.

11. Getreideprodukt nach einem der vorhergehenden Ansprüche, wobei das Getreideprodukt eine organische Säure beinhaltet.

12. Getreideprodukt nach einem der vorhergehenden Ansprüche, wobei das Getreideprodukt ein Fett beinhaltet.

13. Ein Verfahren zur Herstellung eines teilchenförmigen Getreideprodukts beinhaltend die Verfahrensschritte
i. Bereitstellen eines expandierten Getreidegriess,
ii. Kontaktieren eines Alkalicarbonats mit dem expandierten Getreidegriess in Gegenwart eines Bindemittels unter Erhalt des teilchenförmigen Getreideprodukts mit immobilisiertem Akalimetallcarbonat,
iii. gegebenenfalls Trocknen des teilchenförmigen Getreideprodukts.

14. Verfahren nach Anspruch 13, wobei das Bindemittel und das Alkalicarbonat vor Verfahrenschritt ii. miteinander in Kontakt gebracht wurden.

15. Teilchenförmiges Getreideprodukt erhältlich nach einem Verfahren gemäß einem der Ansprüche 13 und 14.

16. Verfahren zur Herstellung einer Nahrungsmittelmischung beinhaltend als Verfahrensschritte
Ia. Bereitstellen eines teilchenförmigen Getreideprodukts nach einem der Ansprüche 1 bis 12, oder 15,
IIa. In Kontakt bringen des teilchenförmigen Getreideprodukts mit mindestens einer weiteren Nahrungsmittelkomponente

17. Verwendung des teilchenförmigen Getreideprodukts nach einem der Ansprüche 1 bis 12 oder 15 als Lebensmittel oder Lebensmittelbestandteil.
